(19) Europäisches Patentamt
European Patent Office
Office européen des brevets

(11) Veröffentlichungsnummer: **0 419 951 B1**

# (12) EUROPÄISCHE PATENTSCHRIFT

(45) Veröffentlichungstag der Patentschrift: **13.07.94**

(51) Int. Cl.5: **C08F 265/08**

(21) Anmeldenummer: **90117612.3**

(22) Anmeldetag: **13.09.90**

## (54) Verfahren für die Festphasenpolymerisation von Acrylnitril aus der Gasphase.

(30) Priorität: **26.09.89 DE 3932018**

(43) Veröffentlichungstag der Anmeldung:
**03.04.91 Patentblatt 91/14**

(45) Bekanntmachung des Hinweises auf die Patenterteilung:
**13.07.94 Patentblatt 94/28**

(84) Benannte Vertragsstaaten:
**DE FR GB IT**

(56) Entgegenhaltungen:
**EP-A- 0 138 224**

(73) Patentinhaber: **BAYER AG**
**D-51368 Leverkusen(DE)**

(72) Erfinder: **Feltgen, Karl-Heinz, Dr.**
**Iltisweg 62**
**D-4047 Dormagen 11(DE)**
Erfinder: **Franck, Rüdiger, Dr.**
**Theodor-Heuss-Ring 54**
**D-5000 Köln 1(DE)**
Erfinder: **Hable, Konrad**
**Saarlauterner Strasse 16**
**D-5090 Leverkusen 1(DE)**
Erfinder: **Korte, Siegfried**
**Engstenberger Hoehe**
**D-5068 Odenthal(DE)**
Erfinder: **Heckenbach, Manfred, Dr.**
**Kirschenweg 6**
**D-5024 Pulheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur radikalischen Homo- oder Copolymerisation von Acrylnitril mit einem oder mehreren copolymerisierbaren Monomeren unter Reaktionsbedingungen, bei denen die Monomeren überwiegend gasförmig bzw. in adsorbierter Form vorliegen und die Polymerisation über vermutlich adsorbierte Monomere in der Festphase erfolgt (Massepolymerisation) und zu pulverförmigen PAN-(Co)-Polymerisaten führt. Vorzugsweise wird in Gegenwart solcherart geringer Mengen einer Vermittlersubstanz wie Dimethylformamid gearbeitet, welche die pulvrige Konsistenz der PAN-Polymerisate nicht verändert, aber erheblich schneller und mit erheblich besserer Ausbeute zu neugebildeten Polyacrylnitrilpolymeren führt.

Die bekanntesten Verfahren zur Polymerisation von Acrylnitril (im folgenden mit AN bezeichnet) zu Polyacrylnitril oder seinen Copolymerisaten (PAN) sind die Fällungspolymerisation und die Lösungspolymerisation. Diese Verfahren arbeiten alle in flüssiger Phase, wobei die flüssige Phase im wesentlichen aus einem oder mehreren Monomeren und einem Verdünnungs- oder Lösungsmittel besteht. In der Flüssigphase ist das Polymere entweder suspendiert (Nichtlösungsmittel für PAN) oder gelöst (in Lösungsmitteln für PAN).

Die genannten Verfahren haben den Nachteil, das zur Weiterverarbeitung des Polymerisates die Flüssigphase (Lösungsmittel, Restmonomere etc.) vollkommen (wenn das reine Polymerisat erwünscht ist) oder bis auf das Lösungsmittel (wenn im Fall der Lösungspolymerisation eine Polymerlösung hergestellt werden soll) vom Polymerisat abgetrennt werden muß. Bei der vollkommenen Abtrennung der Flüssigphase muß das Polymere vor der Weiterverarbeitung gewaschen und getrocknet werden. Die abgetrennte Flüssigphase muß vor ihrer Rückführung in den Prozeß gereinigt und in ihre Bestandteile aufgetrennt werden.

Diese Nachteile, die bei Flüssigphasenverfahren aller Art durch die notwendige Aufarbeitung bedingt sind, zeigt die Massepolymerisation aus der Gasphase von Monomeren nicht, weshalb nach diesem Prinzip schon Verfahren zur Polymerisation von Monomeren, wie z.B. Ethylen, Propylen und Vinylchlorid, entwickelt worden sind. Die Polymerisation von Ethylen und Propylen wird durch metallorganische Verbindungen katalysiert, während Vinylchlorid in Gegenwart eines radikalischen Initiators polymerisiert wird. Diese Verfahren arbeiten alle bei weitaus höheren Drücken, als sie gewöhnlich aufgrund der Dampfdruck-Temperatur-Abhängigkeit der Monomeren bei der Homo- oder Copolymerisation von Acrylnitril und den dabei üblichen Reaktionstemperaturen physikalisch möglich sind. Bei z.B. 60 °C liegt der Dampfdruck von Vinylchlorid bei etwa 9650 hPa, wohingegen derjenige von AN im Unterdruckbereich bei etwa 540 hPa liegt.

Eine Polymerisation von AN aus der Gasphase wurde bisher zumeist mit dem Ziel durchgeführt, andere feinteilige Stoffe, wie z.B. PVC-Pulver oder Cellulose-Fasern, durch Pfropfpolymerisation zu modifizieren (vgl. EP-A-138 224, wo ein gasförmiger Katalysator für Pfropfreaktionen beansprucht wird; I.Yu. Babkin et al, Khimicheskie Volokna, No. 3, S. 13-15 (1970), beschreibt die Oberflächen-Modifizierung ultrafeiner PVC-Fasern durch γ-Strahlen-induzierte Pfropfung mit AN; D.A. Kritskaja et al., Vysokomol. Soedin. Ser. A, 21 -(5), 1107-13 (1980), beschreibt Pulverpolymere aus Polyolefinen, welche u.a. mittels strahlenchemischer Pfropfung mit (u.a.) AN einen funktionellen Überzug erhalten).

Die dabei realisierten niedrigen Reaktionsgeschwindigkeiten (im folgenden mit RG bezeichnet) und niedrigen Masseverhältnisse des neugebildeten Polymerisates zum Vorlage(Saat-)Substrat (im folgenden mit Produkt/Saat-Verhältnis bezeichnet) sind für eine Pfropfpolymerisation ausreichend, nicht jedoch für die AN-Masse-Polymerisation zu Polyacrylnitril(co)polymerisaten. Bei den genannten Verfahren wird das zu modifizierende Substrat in eine reine oder mit Inertgas verdünnte AN-Atmosphäre gebracht und die Pfropfung auf dem Vorlagesubstrat entweder durch Bestrahlung mit γ-Strahlen oder durch einen vorher auf die Substratoberfläche aufgebrachten Initiator ausgelöst.

AN wird als mögliches Monomeres für die Polymerisation aus der Gasphase in der Patentschrift US-3 595 840 erwähnt, jedoch werden keine Ausführungsbeispiele angegeben und es werden Reaktionsbedingungen vorgeschlagen, bei denen AN flüssig vorliegt. Es werden PVC-Polymerisationsreaktionen durchgeführt, wobei das gebildete Polymere jeweils gemahlen wird und in dieser feineren Form wieder in den Reaktor zur Weiterreaktion eingeführt wird. Ohne Mahlung kommt die Polymerisation praktisch zum Stillstand.

Es ist nur eine Arbeit bekannt (Jones, T.T. und Melville, H.W., Proc. Roy. Soc. (London), Ser. A, 187, 37 (1946)), in der Experimente zur Gasphasen-Homopolymerisation von AN beschrieben werden. In dieser Arbeit wurde versucht, AN photochemisch in Gegenwart von Aceton als Photoinitiator und in der Gasphase zu polymerisieren. Die dabei erzielte RG war sehr gering; Sie betrug nur einige wenige Gramm Polymerisat pro Stunde und pro Kubikmeter Reaktionsvolumen.

Eine reine Massepolymerisation von flüssigem AN ist technisch praktisch nicht beherrschbar, da bei Polymerisation die Masse viskoser und nicht mehr rührbar wird und dann die Reaktionswärme äußerst schwierig abzuleiten ist, weshalb dieses Verfahren keine technische Anwendung finden konnte.

Im Gegensatz zur Pfropfpolymerisation müssen bei der gewöhnlichen Feststoff/Masse-Polymerisation aus der Gasphase, die direkt zu pulverigen Feststoffen führen soll, eine weitaus höhere Reaktionsgeschwindigkeit und ein erheblich größeres Produkt/Saat-Verhältnis realisiert werden, um sie technisch/wirtschaftlich betreiben zu können. Aus diesem Grunde sprechen die zur Pfropfpolymerisation von AN aus der Gasphase bekannten Beobachtungen nicht für die Anwendbarkeit dieses Verfahrens für die Herstellung von AN-Homo- oder Copolymerisaten.

Man stellt bei der Prüfung des Standes der Technik somit fest, daß generell Vorteile erkannt wurden, welche eine Polymerisation aus der Gasphase gegenüber derjenigen aus der Flüssigphase besitzt. Für Monomere mit, im Vergleich zu AN, hohem Dampfdruck wurden solche Verfahren auch entwickelt. Bezüglich der Homo- und Copolymerisation von AN lagen bisher jedoch technisch hinreichende Beispiele oder gar brauchbare Verfahren nicht vor.

Es war Aufgabe der Erfindung, die Feststoff/Masse-Polymerisation von AN aus der Gasphase zu pulvrigen Feststoffen mit dem Ziel durchzuführen, eine geeignete (kontinuierliche) Reaktionsführung zu realisieren und dabei technisch interessante RG und hohe Ausbeuten an PAN(Co)-Polymerisaten zu erreichen.

Es wurde nun gefunden, daß Acrylnitril alleine oder gemeinsam mit anderen, copolymerisierbaren Monomeren bei Druck- und Temperaturbedingungen, bei denen das oder die Monomeren im thermodynamischen Gleichgewicht gasförmig oder sorbiert vorliegen, und gegebenenfalls in Anwesenheit eines Inertgases, diskontinuierlich oder kontinuierlich mit hoher RG zu einem Polymerpulver mit überraschend hoher Schüttdichte (von vorzugsweise ≧300 $kg/cm^3$, besonders ≧600 $kg/m^3$), gegebenenfalls mit ins Polymere eingebauten farbaffinen sauren Gruppen aus bestimmten Radikalstartersystemen, polymerisiert werden kann, wenn im Reaktor eine durch Rühren oder eine andere Technik aufgewirbelte und vermischte Pulverschüttung als Saatpolymeres vorliegt, die Temperatur 30 bis 120 °C und der Acrylnitril-Partialdruck 80 bis 3200 hPa und 50 bis 100 % des Sattdampfdruckes der AN-Dampfphase beträgt und dem Polymerpulver kontinuierlich ein oder mehrere Polymerisationsinitiatoren, gegebenenfalls eine Vermittlersubstanz (vorzugsweise Lösungsmittel für Polyacrylnitril) in solchen Mengen zugegeben wird, daß das PAN-(co)polymerisatpulver noch rührbar/vermischbar bleibt und gegebenenfalls Molmassenregler mitverwendet werden.

Gegenstand der Erfindung ist somit ein Verfahren zur Herstellung von Polyacrylnitrilpolymeren und Polyacrylnitrilcopolymeren durch Festphasenpolymerisation von Acrylnitril aus der Gasphase in Gegenwart von Initiatoren und von vorgelegten Feststoffen, dadurch gekennzeichnet, daß man

a) Acrylnitril, alleine oder gemeinsam mit anderen copolymerisierbaren Monomeren zu pulverförmigen PAN-(Co)-Polymerisaten umsetzt, bei

b) Druck- und Temperaturbedingungen, bei denen das Monomere und gegebenenfalls Comonomere im thermodynamischen Gleichgewicht gasförmig oder sorbiert vorliegen, bei 30 bis 120 °C, vorzugsweise bei 40 bis 90 °C und insbesondere bei 45 bis 70 °C, unter einem Acrylnitril-Partialdruck von 80 bis 3200 hPa und einem Sättigungswert $P_M/P_M^o$ (Verhältnis aus tatsächlichem Dampfdruck $P_M$ und dem Sattdampfdruck $P_M^o$ des bzw. der Monomeren) von 0,5 bis 1, bevorzugt 0,75 bis 0,97,

unter weitgehendem Ausschluß von Sauerstoff,

c) in Gegenwart eines PAN-(Co)Polymeren als pulverförmiges Saatpolymer

d) und in Gegenwart von unter den Reaktionsbedingungen praktisch nichtflüchtigen Initiatoren,

e) gegebenenfalls in Gegenwart von flüssigen Vermittlersubstanzen, welche Lösungsmittel oder starke Quellmittel für PAN-Homo- oder Copolymerisate darstellen, besonders hochpolare organische Amid-, Sulfoxid-, Sulfon- oder Phosphoramidverbindungen, insbesondere Dimethylformamid, Dimethylacetamid oder Dimethylsulfoxid, in solch geringen Mengen, daß das Saatpolymer c) noch pulverförmig rührbar ist, vorzugsweise in Mengen von 0,1 bis 15 Gew.-% bezogen auf jeweils vorhandenes PAN(Co)Polymerisat, besonders 1 bis 12 Gew.-% und insbesondere 3 bis 10 Gew.-%,

f) gegebenenfalls in Gegenwart von Inertgasen,

mit einer hohen Reaktionsgeschwindigkeit, welche zu einer Verdoppelung der vorgelegten Saat-Pulvermasse in einer Zeit $\tau$ <15, vorzugsweise <10, insbesondere <8 h führt, und dabei auf das in Bewegung gehaltene, vorgelegte PAN(Co)Polymerisat flüssiges Acrylnitril auf- oder einleitet und über eine Regelung den Sättigungswert $P_M/P_M^o$ in den beanspruchten Grenzen hält und überschüssige Monomere außerhalb des Reaktionsgefäßes kondensiert und flüssig in das Reaktionsgefäß zurückführt und die Initiatoren und gegebenenfalls Vermittlersubstanzen in zumindest einen der Zuleitungsströme kontinuierlich oder intermittierend einträgt. (Der Index M bei den Drücken bedeutet, daß jeweils der Partialdruck der Monomeren

einzusetzen ist).

Das erfindungsgemäße Verfahren kann sowohl zur Herstellung eines PAN-Homopolymerisates als auch zur Herstellung eines PAN-Copolymerisates (Acryl- und Modacrylpolymere) dienen. Als copolymerisierbare Monomere können im Prinzip alle für die Copolymerisation von AN bekannten Monomeren eingesetzt werden. Die Acrylcopolymere sollen mindestens 40 Gew.-% Acrylnitril, vorzugsweise ≧85 Gew.-% Acrylnitril, besonders >90 Gew.-% Acrylnitril enthalten. Übliche Comonomere sind Acryl- und Methacrylsäureester sowie Vinylcarbonsäuren. Besonders geeignet sind Vinylacetat und Acrylsäuremethylester. Es können jedoch auch andere Comonomere, die bei den genannten Reaktionsbedingungen aus der Gasphase umgesetzt werden können, eingesetzt werden, z.B. Styrol und seine Derivate und vinylisch ungesättigte Kohlenwasserstoffe, die auch halogeniert sein können, z.B. Ethylen, Propylen, Isobuten, Butadien, Vinylchlorid, Vinylidenchlorid und ähnliche.

Um die Polymerisation nach dem erfindungsgemäßen Verfahren durchführen zu können, wird zu Beginn der Reaktion ein Vorlage- oder Saatsubstrat benötigt. Das Vorlagesubstrat sollte ein Polymerpulver sein, das gute Sorptionseigenschaften bezüglich der zu polymerisierenden Monomeren besitzt. Bevorzugt verwendet werden Polyacrylnitril (PAN) und seine Copolymerisate. Das Vorlagepulver wird in das Reaktionsgefäß gefüllt, worauf dieses, z.B. durch Evakuieren und durch gegebenenfalls wiederholtes Spülen mit inerten Gasen (wie Stickstoff) und anschließendes Evakuieren, vollkommen von gasförmigen Verunreinigungen befreit wird. Insbesondere Sauerstoff, auch in sehr kleinen Mengen, hemmt die Polymerisationsreaktion.

Das Polymerpulver wird unter Rühren auf die Reaktionstemperatur temperiert, die 30 bis 120 °C betragen kann und bevorzugt bei 40 bis 90 °C, insbesondere bei 45 bis 70 °C liegt.

Ist die Reaktionstemperatur erreicht, wird der Reaktionsdruck eingestellt, indem (flüssiges) Monomeres oder eine Mischung von (flüssigen) Monomeren in den erwärmten Reaktionsraum geleitet wird. Durch Verdampfen der Monomer-Flüssigkeiten steigt der Druck. Nach Erreichen des gewünschten Druckniveaus wird gegebenenfalls überschüssiger Monomerdampf, z.B. über ein Drosselventil, entspannt und in einem angeschlossenen Kondensator außerhalb des Reaktionsraumes verflüssigt. Der Reaktionsdruck kann auch mit z.B. einem geregelten Kondensator eingestellt werden.

Der AN-Partialdruck bzw. Partialdruck der Monomeren-Mischung im Reaktor kann je nach Reaktionstemperatur zwischen 80 hPa und 3200 hPa betragen. Der AN-(Partial)Druck wird so eingestellt, daß die Sättigung $P_M/P_M°$, d.h. das Verhältnis aus dem tatsächlichen Dampfdruck $P_M$ und dem Sattdampfdruck $P_M°$ des Monomeren bzw. der Monomerenmischung, einen Wert von 0,5 bis 1, bevorzugt von 0,75 bis 0,97 hat. Eine Sättigung von 0,83 bis 0,95 hat sich als besonders günstig erwiesen. Das Reaktionsgefäß kann somit unter Unterdruck stehen; zur Verhinderung von Luft/ Sauerstoff-Einbrüchen kann jedoch auch ein Inertgas von Normaldruck oder zur Erzeugung von Überdruck eingesetzt werden.

Das flüssige Monomere wird direkt der Pulverschüttung zugeführt (bevorzugt in insbesondere unterhalb der Pulveroberfläche), wobei es gleichmäßig im Pulver verteilt wird, ohne daß die Fließeigenschaften des Pulvers wesentlich beeinflußt werden. Das Monomere verdampft dabei praktisch sofort oder wird sofort sorbiert, so daß praktisch keine flüssige Phase im (Saat)-PAN-Polymer vorliegt. Es wird angenommen, daß eine Sorption des Acrylnitrils an das PAN-Feststoff-Substrat entscheidend für den Ablauf der Weiterpolymerisation ist.

Mit Ausnahme der Startphase der Reaktion wird die zur Verdampfung notwendige Wärme durch die freiwerdende Reaktionswärme der Polymerisation (für PAN $\Delta_R{}^H$ = -76,5 kJ/ mol) geliefert. Da im stationären Zustand die freiwerdende Reaktionswärme größer ist als die zur Verdampfung der durch Polymerisation verbrauchten Monomeren notwendige Warme, wird durch Rückführung von überschüssigen Monomeren und im Kondensator wieder verflüssigten Monomeren, das bei erneutem Verdampfen im Reaktionsraum die Polymerisationsreaktionswärme aufnimmt, die Reaktionstemperatur im Reaktor geregelt.

Der Polymerisationsinitiator und gegebenenfalls die Vermittlersubstanz können in dem Monomeren oder der Monomerenmischung gelöst bzw. damit vermischt dem Reaktionsraum zugeführt werden. Die Zuführung der Monomeren kann aber auch getrennt von der Vermittlersubstanz erfolgen, wobei der Initiator auch in der Vermittlersubstanz gelöst sein kann. Die Zuführungsart kann sinnvoll variiert werden, z.B. unter Berücksichtigung der über Kondensation zurückgeführten AN-Monomerströme bzw. unter getrennter Zuleitung von Redoxinitiatorkomponenten.

Die Polymerisation kann unter Verwendung eines üblichen Molmassenreglers, z.B. Mercaptanen, durchführt werden, um erwünschte Molekularmassengrößenordnungen einzustellen, da üblicherweise die Festphasenpolymerisation zu relativ hohen Molekularmassen (Molekulargewichten) führt.

Als Polymerisationsinitiatoren können alle für die Homo- und Copolymerisation von Acrylnitril bekannten Substanzen eingesetzt werden. Besonders eignen sich solche Substanzen, die bei der Reaktionstemperatur einen Dampfdruck kleiner als 10 hPa, bevorzugt kleiner als 3 hPa haben, so daß sie nicht mit dem überschüssigen Monomerdampf in den Kondensator gelangen und keine Polymerisation in der flüssigen

Phase ausgelöst werden kann.

Zur Initiierung werden bevorzugt radikalisch wirkende Initiatoren verwendet, die entweder durch thermischen Zerfall oder durch eine Redoxreaktion aktiviert werden. Bei Verwendung von Redoxsystemen, die reduzierbare Schwefelverbindungen, einschließlich gasförmiges $SO_2$, beinhalten, werden farbaffine schwache bis stark saure Gruppen in Form von Sulfonatgruppen ins Polymere eingebaut.

Bei Verwendung eines thermisch aktivierbaren Initiators wird das den Initiator enthaltende flüssige Monomere bis zum Eintritt in den Reaktionsraum gekühlt. Dadurch wird die Polymerisation in flüssiger Phase in der Zuleitung verhindert.

Bei Verwendung eines Redox-Initiatorsystems, das aus einer Oxidations- und einer Reduktionskomponente besteht, werden beide Komponenten (die in Monomeren gelöst sein können), über getrennte Zuleitungen dem Reaktionsraum zugeführt, um eine Polymerisation in flüssiger Phase in einer Zuleitung zu unterbinden.

Bei Verwendung eines Redox-Initiatorsystems kann es sinnvoll sein, wenn ein Reaktionspartner eine Initiator-Substanz mit niedrigem Dampfdruck (z.B. ein Hydroperoxid mit einem Alkylrest mit mehr als 12 Kohlenstoffatomen) und der andere Reaktionspartner ein Gas (z.B. $SO_2$ oder ein (tertiäres) Amin ist. Der Vorteil einer solchen Wahl der Komponenten des Initiatorsystems besteht darin, daß aufgrund der großen Beweglichkeit der gasförmigen Komponente beide Komponenten leicht miteinander in Kontakt kommen und miteinander reagieren können. Wegen des niedrigen Dampfdrucks der einen Komponente besteht auch bei dieser Ausführungsform des erfindungsgemäßen Verfahrens nicht die Gefahr einer unerwünschten Polymerisation des Monomeren.

Unabhängig von der Auswahl des Initiatorsystems kann es vorteilhaft sein, nicht nur einen Initiator, sondern eine Mischung von Inititatoren zu verwenden, um eine für die Beherrschung der Polymerisation erwünschte Zerfallcharakteristik einzustellen oder synergetische, d.h. die Polymerisation beschleunigende, Effekte zu nutzen.

Es ist günstig, den oder die Initiatoren bzw. die schwer flüchtigen Komponenten des Initiatorsystems, ebenso wie weitere nicht flüchtige Zusatzstoffe in einer möglichst großen Menge an Monomeren und/oder Vermittlersubstanz zu lösen, um bei der Einmischung der Reaktionslösung in den Reaktionsraum eine gleichmäßige Verteilung der nicht flüchtigen Stoffe auf dem Pulver zu erreichen.

Aus der Klasse der thermisch aktivierbaren Initiatoren sind besonders diejenigen geeignet, die bei der Reaktionstemperatur eine Halbwertszeit von 5 min bis 5 h haben.

Eine Gruppe aus der Klasse der geeigneten, thermisch aktivierbaren Initiatoren sind Azoverbindungen, insbesondere Azonitrile, die durch folgende allgemeine Strukturformel charaktisiert werden,

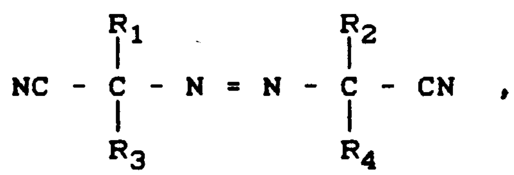

wobei die Endgruppen $R_1$, $R_2$, $R_3$, $R_4$ Wasserstoff-, Alkyl-, Cycloalkyl- und Aralkylreste sein können, die halogensubstituiert sein können und 1 bis 10 Kohlenstoffatome beinhalten.

Eine andere Gruppe geeigneter radikalischer Initiatoren, die Dialkylperoxide, Persäuren, Diacylperoxide, Perester und Peroxide, die Sulfonylgruppen beinhalten, umfaßt, wird durch folgende Strukturformel charakterisiert,

$R_5$ - X - O - O - Y - $R_6$ ,

wobei die Endgruppen $R_5$ und $R_6$ Wasserstoff-, Alkyl-, Cycloalkyl-, Aryl-, Alkaryl-, Aralkyl, Alkylcycloalkyl- und Cycloalkylalkyl-Reste sein können, die möglicherweise halogensubstituiert sind und 1 bis 15 Kohlenstoffatome beinhalten. Die Gruppen X und Y können folgende Bedeutung haben,

X, Y= 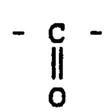 oder 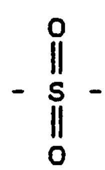 ;

es ist möglich, daß eine der Gruppen X und Y entfällt oder beide Gruppen X und Y gemeinsam entfallen.

Die Dialkylperoxidicarbonate, die durch folgende Strukturformel charakterisiert werden,

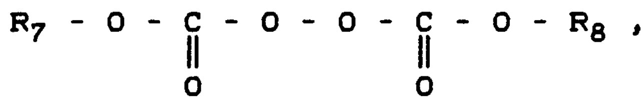

insbesondere Dicyclohexylperoxidicarbonat, Diisopropylperoxidicarbonat und Di-2-ethylhexylperoxidicarbonat haben sich als besonders geeignete, thermisch aktivierbare Initiatoren erwiesen. Die Endgruppen $R_7$ und $R_8$ können Alkyl-, Cycloalkyl-, Aryl-, Alkaryl-, Aralkyl-, Alkylcycloalkyl-, Alkenyl-, Cycloalkenyl-, Alkylcycloalkenyl- oder Cycloalkylalkenyl-Reste sein, die 1 bis 20 Kohlenstoffatome enthalten und möglicherweise halogensubstituiert sind.

Beispiele aus den genannten Gruppen sind Azo-bis(isobutyronitril), Azo-bis(2,4-dimethylvaleronitril), Dicumylperoxid, t-Butyl-cumyl-peroxid, Bis-(2,4-dichlorobenzoyl)-peroxid, Dilauroylperoxid, Didecanoylperoxid, Dicyclohexyl-peroxid, Dibenzoylperoxid, Bis-(2-methyl-2-benzoyl)-peroxid,Acetyl-cyclohexansulfonylperoxid, t-Butyl-perneodecanoat, Cumyl-perneodecanoat, t-Amyl-perneodecanoat, t-Butyl-perpivalat, t-Butylper-2-ethylhexanoat, Diisopropyl-peroxidicarbonat, Di-2-ethylhexyl-peroxidicarbonat, Dicyclohexyl-peroxidicarbonat, Bis-(4-t-butylcyclohexyl)-peroxidicarbonat, Dimyristyl-peroxidicarbonat, Dicetylperoxidicarbonat, Di-(sec.-butyl)peroxidicarbonat und ähnliche.

Aus der Gruppe der Redoxsysteme sind für die Initiierung der Polymerisation geeignet Kombinationen aus einem Peroxid mit einem tertiären Amin oder Kombinationen aus Wasserstoffperoxid oder einem organischen Hydroperoxid mit einem Hydroxylamin, einer Hydroxamsäure, mit Glucose oder Ascorbinsäure oder einer der folgenden reduzierbaren Schwefelverbindungen einer niedrigen Wertigkeit, nämlich $SO_2$ oder eine der durch folgende allgemeine Formeln charakterisierten Verbindungen,

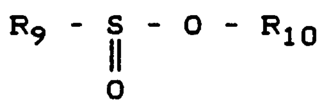

und

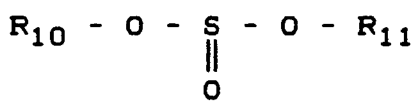

wobei $R_9$ Alkyl-, Hydroxyalkyl-, Cycloalkyl oder Aryl- oder Alkylaryl-Reste mit 1-18 C-Atomen und $R_{10}$ Wasserstoff- oder Alkyl-Reste und $R_{11}$ unabhängig voneinander ein linearer oder verzweigter Alkylrest, der auch in substituierter Form vorliegen kann, oder ein Cycloalkylrest mit 5-18 C-Atomen (Ring C + C-Substituenten) darstellt, sein können.

Die Sulfinsäuren können auch in Form monomerer löslicher Salze der allgemeinen Formel

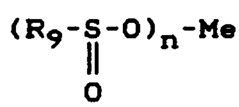

verwendet werden, wobei Me vorzugsweise Ammonium, Magnesium oder Zink bedeuten. Dem Redoxsystem kann man auch in geringen Mengen nucleophile Verbindungen wie Wasser oder Alkohole zusetzen.

Bevorzugt werden Kombinationen verwendet, bei denen eine der beiden Komponenten bei der Reaktionstemperatur einen Dampfdruck hat, der kleiner als 10 hPa, insbesondere kleiner als 3 hPa ist, so daß sie nicht mit dem überschüssigen Monomerdampf in den Kondensator gelangt und keine Polymerisation in der flüssigen Phase ausgelöst werden kann.

Beispiele für die genannten Kombinationen von Redoxsystemen sind Cumolhydroperoxid/$SO_2$, tert.-Butylhydroperoxid/$SO_2$, Dodecylhydroperoxid/$SO_2$, 1,4-Diisopropylbenzol-dihydroperoxid/$SO_2$, 2,5-Dimethylhexan-2,5-dihydroperoxid/$SO_2$, 1,4-Diisopropylbenzol-dihydroperoxid/$SO_2$ und ähnliche.

Generell können alle bekannten thermisch oder durch Redoxreaktion aktivierbaren Initiatoren verwendet werden, soweit sie den früher genannten Bedingungen entsprechen. Zur Auswahl geeigneter Peroxide sei

insbesondere auf J. Brandrup und E.H. Immergut (Ed.), Polymer Handbook, 2. Aufl., Wiley, New York 1975 verwiesen.

Bevorzugt sind erfindungsgemäß solche Initiatoren, mit denen Reaktionsgeschwindigkeiten (RG) erreicht werden, bei denen die Pulvermasse in einer Zeit $\tau$ verdoppelt werden kann, welche <15 Stunden, bevorzugt <10 Stunden (z.B. 0,3 bis 8 Stunden) beträgt.

Bei Untersuchungen der Geschwindigkeit der Reaktion zeigte sich, daß bei sonst unveränderten Reaktionsbedingungen die RG mit zunehmendem Produkt/Saat-Verhältnis sehr stark abnahm und u.U. praktisch zum Stillstand kam.

Überraschenderweise wurde nun gefunden, daß die RG auch bei steigendem Produkt/Saat-Verhältnis konstant bleibt, wenn dem Reaktionssystem eine Vermittlersubstanz zugesetzt wird (s. Fig. 2). Darüber hinaus bewirkt der Zusatz der Vermittlersubstanz eine deutliche Erhöhung der RG im Vergleich zu Polymerisationen, die bei identischen Reaktionsbedingungen, aber ohne Zusatz der Vermittlersubstanz durchgeführt werden. Als Vermittlersubstanz werden organische, polare Flüssigkeiten, insbesondere Amide, Sulfoxide oder Sulfone eingesetzt, die das Polymere zu quellen oder bevorzugt zu lösen vermögen. Besonders technisch bevorzugt ist, dasjenige Lösungsmittel zu verwenden, das auch bei der Weiterverarbeitung des Polymeren eingesetzt wird, z.B. bei der Verspinnung. Als besonders geeignete Vermittlersubstanzen haben sich erwiesen Dimethylacetamid, Dimethylsulfoxid und insbesondere Dimethylformamid. Zur Auswahl von Substanzen mit lösenden Eigenschaften für PAN-Homo-oder Copolymerisate sei auf die J. Brandrup und E.H. Immergut (Ed.), Polymer Handbook, 2. Aufl., Wiley, New York 1975 verwiesen. Weitere geeignete Vermittlersubstanzen sind z.B. N-Methylpyrrolidon, N-Methylcaprolactam, Tetramethylensulfon oder Hexamethylphosphoramid. Die Menge der eingesetzten Vermittlersubstanzen ist so gering zu wählen, daß die Fließeigenschaften des Polymerpulvers erhalten bleiben und das PAN weiterhin eine rührbare Pulvermasse bleibt.

Insbesondere ist sie so zu wählen, daß sie im Bereich von 0,5 bis 15 Gew.-%, bezogen auf das entstehende Polymere und innerhalb dieser Grenzen im Verlauf der Feststoff-Polymerisation gehalten wird (evtl. geeignete Nachdosierung von Vermittlersubstanzen (z.B. DMF) während der Feststoff-Polymerisation). Bevorzugt liegen die Grenzen bei 1 bis 12 Gew.-%, insbesondere 3 bis 10 Gew.-% Vermittlersubstanz. Obwohl auch bei einer größeren Menge (>15%) Vermittlersubstanz (z.B. DMF) das PAN-Pulver seine Fließeigenschaften beibehält und gut rührbar bleibt, tendieren solche hochprozentigen Mischungen bei der Festphasen-Polymerisation dann zum Verbacken.

Es war sehr überraschend, daß durch Zusatz der Vermittlersubstanzen, z.B. DMF, eine drastische RG-Erhöhung wie auch insbesondere Produkt/Saat-Ausbeuteverhältnis-Erhöhung erfolgt und keine Verklebung des PAN-Pulvers erfolgt. Bekanntermaßen ist das System PAN-Pulver/DMF-Lösungsmittel hinsichtlich seiner Verklebung/Verschmierung sehr empfindlich und beim Lösen von PAN in DMF müssen üblicherweise spezielle Maßnahmen ergriffen werden (siehe Stand der Technik).

Als Molmassenregler können alle für die Homo- und Copolymerisation von AN bekannten Substanzen eingesetzt werden. Als Beispiele seien genannt Mercaptane und Aldehyde, insbesondere Methylmercaptan, Octylmercaptan, Acetaldehyd und Propionaldehyd, letzterer bevorzugt.

Das erfindungsgemäße Verfahren kann in einer Vorrichtung, wie in Fig. 1 wiedergegeben, erfolgen. Die Vorrichtung besteht aus einem temperierbaren, gegebenenfalls vakuumdichten bzw. druckbeständigen Reaktionsgefäß (1), das mit einem Rührer (2) ausgestattet ist. Die Bestandteile der Reaktionsapparatur, die mit dem unter Reaktionsdruck stehenden Monomerdampf in Kontakt kommen, sollen mindestens auf Reaktionstemperatur temperiert sein, um eine unkontrollierte Kondensation des Monomerdampfes zu verhindern.

Da eine gute Vermischung der Pulverschüttung für eine hohe Effizienz des Initiators wichtig ist, werden Rührer oder andere Misch- und Verwirbelungsvorrichtungen (z.B. Fließbett-Vorrichtungen) verwendet, die besonders für das Mischen und Homogenisieren von Pulvern und auch für das Einmischen von Flüssigkeiten in Pulver geeignet sind. Als Rührer eignen sich besonders Rahmen- und Wendelrührer.

Frische Reaktionslösung wird über die Zuflußleitung (3) in den Reaktor gefördert. Die Reaktionslösung besteht aus allen oder einem Teil der folgenden Komponenten: AN, ein oder mehrere Comonomere, ein oder mehrere Initiatoren bzw. Initiatorkomponenten, eine Vermittlersubstanz und ein oder mehrere Regler. Neugebildetes Polymerisat kann über eine Austragsvorrichtung (4), die z.B. aus einer Schnecke und einer Pulverschleuse bestehen kann, ausgetragen werden. Überschüssiger Monomerdampf wird druckgeregelt über ein Drosselventil (5) entspannt. Zur Abscheidung von mitgerissenem Polymerpulver kann der Reaktionsapparat entweder über eine Beruhigungszone verfügen oder es kann ein Filter (6) zwischen Reaktorausgang und Drosselventil angeordnet werden. Der entspannte Monomerdampf wird im Kondensator (7) verflüssigt. Das Kondensat kann mit der Pumpe (8) in den Reaktor zurückgeführt werden, um bei neuerlichem Verdampfen die Reaktionswärme aufzunehmen und abzuführen. Der Förderstrom der Pumpe

(8) wird mit einer Temperaturmeßstelle mengengesteuert: bei Temperaturanstieg fördert die Pumpe (mehr) Monomeres in den Reaktor und bei Absinken der Temperatur wird der Förderstrom gedrosselt. Das Kondensat kann mit Hilfe der Pumpe (9) auch mit dem Zufluß (3) vermischt werden, um die Verdünnung des Initiators und der Vermittlersubstanz zu vergrößern und damit ihre gleichmäßige Verteilung im Pulver zu begünstigen. Wie vorher schon erwähnt, können die Reaktionsteilnehmer auch getrennt und an unterschiedlichen Orten und in unterschiedlicher Zusammensetzung in den Reaktionsraum eingebracht werden. Es hat sich dabei als günstig erwiesen, den Zuflußort der Reaktanden unterhalb der Oberfläche der Pulverschüttung anzuordnen.

Homo- oder Copolymerisationen aus der Gasphase wurden mit technischer Zielsetzung bisher nur in einem höheren Druckbereich durchgeführt. Deshalb war es überraschend, daß auch bei einem Partialdruck der Monomeren im Unterdruckbereich eine Polymerisation aus der Gasphase durchaus möglich ist. Als besonders überraschend muß die Feststellung gelten, daß die Reaktion durch Zusatz einer speziellen Vermittlersubstanz stark beschleunigt werden kann und nicht nach einer relativ kurzen Polymerisationszeit zum Stillstand kommt. Diese Beobachtung ist umso erstaunlicher, als der Zusatz verschiedener Kohlenwasserstoffe z.B. Cyclohexan, auch zu einer Verlangsamung der Reaktion führt. Darüber hinaus ist beachtlich, daß unter Zusatz der erfindungsgemäß ausgewählten Vermittlersubstanzen etwa gleichbleibend hohe Reaktionsgeschwindigkeiten erzielt werden und ein praktisch 100 % aus der Gasphase entstandenes Polymerisat erhalten wird, d.h. ein Polymerisat mit einem sehr hohen Produkt/Saat-Verhältnis erhalten werden kann (in Beispielen werden Versuche mit Verhältnissen von bis zu 107:1 aufgezeigt). Die Ergebnisse sind umso unerwarteter, als derartige Resultate selbst bei den artverwandten, aber bei einem weitaus höheren Reaktionsdruck durchgeführten radikalischen Polymerisationsverfahren von Vinylchlorid aus der Gasphase üblicherweise nicht vorliegen.

Das Molekulargewicht (Molekularmasse) ($M_w$) der Produkte ist nach dem erfindungsgemäßen Verfahren zumeist relativ hoch (z.B. 100 000 bis 200 000 g/mol, kann auch erheblich höher sein, z.B. 500 000 g/mol oder höher). Trotzdem sind alle Polymere bei 80 °C in DMF glattlöslich und gelfrei.

Geeignete Regler wie Propionaldehyd oder Acetaldehyd oder Alkohole (z.B. Methanole) oder bevorzugt Mercaptane vermögen die Molekulargewichte abzusenken, ohne eine erhebliche Verminderung der RG zu bewirken, d.h. beim Abbruch einer wachsenden Polymerkette wird bevorzugt gleichzeitig eine neue Kette gestartet. Ketone wie Aceton sind i.a. als Regler weniger geeignet, da sie eine Molekulargewichtserhöhung bewirken. Man wird Regler zur Verminderung des Molekulargewichts besonders dann einsetzen, wenn man übliche Textilfasern aus den Polymerisaten herstellen will. Die hohen Molekulargewichte, insbesondere >500 000 bis etwa 3 000 000 g/mol, werden besonders für Hochmodulfasern oder für zu Kohlenstofffasern zu verarbeitende PAN-Fasern verwendet.

Es sind keine Ausführungsbeispiele für die Homo- und Copolymerisation von Acrylnitril aus der Gasphase bekannt, die als Vergleichsversuche zum Stand der Technik dienen könnten, obwohl die Möglichkeit dieser Reaktion in Offenlegungs- bzw. Patentschriften erwähnt wird. Diese Schriften beziehen sich im wesentlichen auf die Polymerisation von Vinylchlorid aus der Gasphase, was dadurch unterstrichen wird, daß für die Gasphasenreaktion ein Druck- und Temperaturbereich vorgeschlagen wird, in dem AN nicht gasförmig, sondern flüssig vorliegt.

Im folgenden werden anhand von Beispielen die wesentlichen Merkmale des erfindungsgemäßen Verfahrens verdeutlicht.

Zur Beurteilung der Ergebnisse der Festphasenpolymerisation laut Beispielen wird eine Reaktionsgeschwindigkeit (RG) bestimmt. Sie kann als Mittelwert aus der gravimetrisch bestimmten Massezunahme des Polymeren und der Versuchsdauer bestimmt werden. Die RG kann auch als Momentanwert bestimmt werden und zwar mit der in einer Meßperiode gemessenen Differenz aus dem Volumen des flüssigen Monomeren, das in den Reaktor gefördert wurde, und dem Volumen des nach der Entspannung im Kondensator wieder verflüssigten Monomeren.

Die RG kann als masse- oder volumenbezogene Größe angegeben werden. Wird sie auf die Masse des im Reaktor vorliegenden Polymerpulvers bezogen, so gibt der Reziprokwert dieser Größe diejenige Zeit an, die benötigt wird, um die Pulvermasse zu verdoppeln. Ist die Schüttdichte $\rho_s$ des Pulvers bekannt, so kann man aus der massebezogenen RG die RG berechnen, die auf das Volumen der ruhenden, d.h. der nicht gerührten oder verwirbelten, Pulverschüttung bezogen ist. Die tatsächliche RG, d.h. die Geschwindigkeit die auf dasjenige Volumen bezogen wird, das die gerührte Pulverschicht tatsächlich einnimmt, ist um denjenigen Faktor kleiner (als die auf das Volumen der ruhenden Pulverschüttung bezogene RG), um den das Pulvervolumen bei der Vermischung zunimmt. Die Größe des Faktors hängt von der Beschaffenheit des Pulvers und von der Art der Pulververmischung ab.

In den folgenden Beispielen wird als Vergleichsgröße der Reziprokwert der auf die Pulvermasse zu Versuchsbeginn bezogenen RG und die auf das entsprechende Volumen des ruhenden Pulvers bezogene

RG benutzt.

Beispiele 1 - 3 (ohne Vermittlersubstanz)

Beispiel 1

Es wurde ein 1,8 l Reaktionsgefäß aus Edelstahl verwendet, das mit einem Rahmenrührer mit sehr kleinem Wandabstand, einem Druckaufnehmer und mit Thermoelementen ausgestattet war. Der Reaktor wurde mit einer Masse $m^o$ = 60 g eines PAN-Saatpulvers gefüllt. Als Saatpulver wurde ein durch Fällungspolymerisation erhaltenes PAN-Homopolymerisatpulver eingesetzt ($\eta_{rel}$ = 2,19, (0,5 Gew.-% PAN in DMF bei 25 °C gemessen; Teilchengröße etwa 14-16 µm (Median ($X_{50}$)-Wert). Der mit Saatpulver gefüllte Reaktor wurde evakuiert und unter Rühren auf eine Reaktionstemperatur von 60 °C temperiert. Durch eine gekühlte Zuleitung und eine Öffnung (z.B. etwa 1 mm Durchmesser), die sich in der Reaktorwand unterhalb der Oberfläche der gerührten Pulverschüttung befand, wurde die gekühlte Reaktionslösung, bestehend aus Monomerem und Initiator, direkt in die gerührte Pulverschüttung gefördert. Die Reaktionslösung bestand aus AN, in dem Dicyclohexyl-peroxidicarbonat (CHPC, Techn. reines Pulver, Fa. Peroxid-Chemie GmbH, Höllriegelskreuth) in einer Konzentration $c_I$ von 1,25 kg/m³ AN gelöst wurde. Die Reaktionslösung wurde mit einem Volumenstrom $V_I$ von18 ml/h in den Reaktionsraum gefördert. Nach Erreichen eines Druckes $P_M$ von 500 hPa, was bei einem Sattdampfdruck $P_M^o$ von etwa 540 hPa einer Sättigung von $P_M/P_M^o$von 0,93 entspricht, wurde der Reaktionsdruck mit Hilfe eines druckgesteuerten, motorangetriebenen Ventils für die Dauer der Reaktion konstant gehalten, indem überschüssiger Dampf in ein Kondensationsgefäß entspannt wurde. Nach einer Reaktionszeit von 5,5 h wurde durch Evakuieren und anschließendes Belüften des Reaktors die Reaktion beendet (Abbruch des Versuchs).

Die Massezunahme Δm des Polymerpulvers betrug 67 g, was einem Produkt/Saat-Verhältnis $z = \Delta m/m^o$ von 1,12 entspricht. Somit wurden 0,20 g des Polymeren pro g Saatgut und h Reaktionszeit gebildet, was einer Zeit $\tau$ von 5 h, die zur Verdoppelung der Pulvermasse benötigt wird, entspricht.

Die Schüttdichte des Pulvers wurde gemessen, indem das Pulver in einen Meßzylinder gefüllt und durch dreißigmaliges Aufstoßen des Meßzylinders auf einer Unterlage aus Hartgummi verdichtet wurde. Die Schüttdichte $\rho_s^{Saat}$ des Saatpulvers betrug 200 kg/m³ und die Schüttdichte $\rho_s^{Produkt}$ des erhaltenen Pulvers 410 kg/m³. Somit wurde bei einer Reaktionstemperatur von 60 °C, einem Reaktionsdruck von 500 hPa und einer auf das Ruhevolumen des vorgelegten Saatpulvers bezogenen Zuflußgeschwindigkeit des Initiators (ZGI)

$$ZGI = c_I * V_I * \rho_s^{Saat}/m^o$$

von ZGI = 75 g $m^{-3}$ $h^{-1}$ eine ebenso bezogene Polymerisationsgeschwindigkeit RGV

$$RGV = \Delta m * \rho_s^{Saat}/(m^o * t)$$

von RGV = 41 kg $m^{-3}$ $h^{-1}$ erreicht.

Beispiel 2

Beispiel 2 wurde wie Beispiel 1 durchgeführt; jedoch wurde als Polymerisationsinitiator Di-2-ethylhexylperoxidicarbonat (EHPC, 75 % Lösung in Aliphaten, Fa. Peroxid-Chemie GmbH, Höllriegelskreuth) verwendet. In flüssigem AN wurden 0,98 kg EHPC/m³ AN gelöst. Die Lösung wurde mit einem Volumenstrom von 41,2 ml/h in den Reaktor gefördert. Das entspricht einer ZGI von 135 g $m^{-3}$ $h^{-1}$. Nach einer Reaktionszeit von 6 h betrug die Gewichtszunahme des Polymeren 68 g. Das entspricht einem Produkt/Saat-Verhältnis von 1,14, einer Zeit $\tau$ von 5,3 und einer RGV von 38 kg $m^{-3}$ $h^{-1}$.

Beispiel 3

Beispiel 3 wurde bei den gleichen Druck- und Temperaturbedingungen, mit dem gleichen Initiator und in gleicher Weise wie Beispiel 1 durchgeführt, jedoch wurde eine höhere Zuflußgeschwindigkeit des Initiators als in Beispiel 1 eingestellt. In flüssigem AN wurde 1,7 kg CHPC/m³ AN gelöst. Diese Lösung wurde mit einem Volumenstrom von 35 ml/h in den Reaktor gefördert. Das entspricht einer ZGI von 198 g $m^{-3}$ $h^{-1}$. Nach einer Reaktionszeit von 6 h betrug die Zunahme der Polymermasse 96 g. Das entspricht einem Produkt/Saat-Verhältnis von 1,6, einer Zeit $\tau$ von 3,8 h und einer RGV von 53 kg $m^{-3}$ $h^{-1}$.

Bei diesem Beispiel wurde auch die momentane RG ($RGV_m$), bezogen auf das Ruhevolumen des Saatpulvers, bestimmt.

Sie wurde wie vorher beschrieben mit dem alle 30 Minuten ermittelten AN-Verbrauch berechnet. Die Ergebnisse sind in Figur 2 als Funktion des Produkt/Saat-Verhältnisses z dargestellt. Man erkennt, daß die $RGV_m$ mit zunehmendem Produkt/Saat-Verhältnis z kontinuierlich abnimmt.

Beispiele mit Vermittlersubstanz

Beispiel 4

In diesem Beispiel wurde der Reaktionslösung als Vermittlersubstanz Dimethylformamid (DMF) zugesetzt, wodurch die RG im Gegensatz zum Beispiel 3 während der Reaktionsdauer nicht mehr absank.

Das Beispiel wurde in analoger Weise zu den vorhergehenden Beispielen durchgeführt. Es wurde eine Mischung aus AN und DMF hergestellt. Die DMF-Konzentration betrug 5,7 Vol.-%. In der AN/DMF-Mischung wurde CHPC gelöst und zwar in einer Konzentration von 1,13 kg/m$^3$ Volumen der AN/DMF-Mischng. Die gekühlte Lösung wurde mit einem Volumenstrom von 62,8 ml/h in den Reaktionsraum gefördert. Das entspricht einer ZGI von 236 g $m^{-3}$ $h^{-1}$. Nach einer Reaktionszeit von 6 Stunden betrug der Zuwachs der Polymermasse 213 g (lösungsmittelfrei berechnet). Das entspricht einem Produkt/Saat-Verhältnis von 3,5, einer Zeit $\tau$ von 1,7 h und einer RGV von 118 kg $m^{-3}$ $h^{-1}$.

Ebenso wie in Beispiel 3 wurde in Beispiel 4 die momentane RG ($RGV_m$) bestimmt. Die Ergebnisse sind gemeinsam mit denjenigen aus Beispiel 3 in Figur 2 dargestellt.

Man erkennt, daß die $RGV_m$ bei Mitverwendung der Vermittlersubstanz (VS) nicht mit dem Produkt/Saat-Verhältnis z absinkt, d.h. i.W. konstant bleibt; die RG der Produkt-Bildung ist erheblich größer als ohne VS.

Beispiel 5

Beispiel 5 wurde in gleicher Weise wie Beispiel 4 durchgeführt, jedoch enthielt die Reaktionslösung weniger Vermittlersubstanz DMF, nämlich 4,8 Vol-%, und mehr Initiator CHPC, nämlich 1,7 kg CHPC/m$^3$ Volumen der AN/DMF-Mischung. Die Reaktionslösung wurde mit einem Volumenstrom von 70 ml/h in den Reaktor gefördert, was einer ZGI von 397 g $m^{-3}$ $h^{-1}$ entspricht. Nach einer Reaktionszeit von 6 h betrug der Massezuwachs des Polymeren 246 g. Das entspricht einem Produkt/Saat-Verhältnis von 4,1, einer Zeit $\tau$ von 1,5 h und einer RGV von 137 kg.$m^{-3}$.$h^{-1}$.

Beispiele 6 bis 10

(Reaktionsfolge unter Verwendung von PAN-Polymerisat aus dem jeweils vorhergehenden Versuch)

In diesen Ausführungsbeispielen wurde ein Polymerpulver mit einem sehr hohen Produkt/Saat-Verhältnis hergestellt, indem als Saatvorlage eines Folgeversuches jeweils das Produkt des vorhergehenden Versuches eingesetzt wurde. Die Masse $m^o$ der Saatvorlage wurde derart gewählt, daß das mit der Schüttdichte $\rho_s^{Saat}$ berechnete Volumen der Pulverschüttung zu Versuchsbeginn etwa 300 ml betrug.

Als Reaktionstemperatur wurde 60 °C und als AN-Partialdruck 490 hPa gewählt. Die Reaktionslösung unterschied sich von derjenigen in Beispiel 5 durch Zusatz von Propionaldehyd als Molmassenregler. Die Reaktionslösung bestand aus 94,34 Vol.-% AN, 4,72 Vol.-% DMF und 0,94 Vol.-% Propionaldehyd. In dieser Mischung wurde CHPC in einer Konzentration von 1,7 kg/m$^3$ gelöst. Die Reaktionslösung wurde mit einem Volumenstrom von etwa 70 ml/h in den Reaktor gefördert, was einer ZGI von 397 g $m^{-3}$ $h^{-1}$ entspricht.

Die Ergebnisse der Beispiele 6 bis 10 sind in Tabelle 1 zusammengefaßt.

In Beispiel 6 (Versuchsstart) wurde eine Masse $m^o$ von 60 g des auch in Beispiel 1 verwendeten Saatpulves vorgelegt. Nach einer Reaktionszeit $t_R$ von 6 h betrug der Massezuwachs $\Delta m$ des Polymeren 235 g. Das entspricht einem Produkt/Saat-Verhältnis z von 3,9, einer Zeit $\tau$ von 1,5 h und einer RGV von 130 kg $m^{-3}$ $h^{-1}$. Die Schüttdichte $\rho_s^{Produkt}$ des Produktes betrug 620 kg/m$^3$.

In Beispiel 7 wurde 190 g des in Beispiel 6 erhaltenen PAN-Feststoff-Pulvers vorgelegt. Nach einer Reaktionszeit von 6 h betrug der Massezuwachs des Polymeren 224 g. Damit betrug das Produkt/Saat-Verhältnis 9,7, die Zeit $\tau$ 5,1 h und die RGV 122 kg•$m^{-3}$•$h^{-1}$. Die Schüttdichte $\rho_s^{Produkt}$ des Produktes betrug 720 kg/m$^3$.

In Beispiel 8 wurden 216 g des in Beispiel 7 erhaltenen PAN-Feststoff-Pulvers vorgelegt. Nach einer Reaktionszeit von 8,5 h betrug der Massezuwachs des Polymeren 343 g. Damit betrug das Produkt/Saat-Verhältnis 26,7, die Zeit $\tau$ 5,4 h und die RGV 134 kg $m^{-3}$ $h^{-1}$. Die Schüttdichte $\rho_s^{Produkt}$ des Produktes betrug 756 kg/$m^3$.

In Beispiel 9 wurden 227 g des in Beispiel 8 erhaltenen Pulvers vorgelegt. Nach einer Reaktionszeit von 6 h betrug der Massezuwachs des Polymeren 219 g. Damit betrug das Produkt/Saat-Verhältnis 53,5, die Zeit $\tau$ 6,2 h und die RGV 122 kg $m^{-3}$ $h^{-1}$. Die Schüttdichte $\rho_s^{Produkt}$ des Produktes betrug 718 kg/$m^2$.

In Beispiel 10 wurden 216 g des in Beispiel 9 erhaltenen Pulvers vorgelegt. Nach einer Reaktionszeit von 6 h betrug der Massezuwachs des Polymeren 211 g. Damit betrug das Produkt/Saat-Verhältnis 107, die Zeit $\tau$ 6,1 h und die RGV 117 kg $m^{-3}$ $h^{-1}$. Die Schüttdichte $\rho_s^{Produkt}$ des Produktes betrug 690 kg/$m^3$.

Ein Produkt/Saat-Verhältnis von 107 entspricht einem Anteil von 0,9 % des ursprünglich, in Versuch 6 eingesetzten PAN-Saatpulvers im Polymerpulver.

Die Versuche wurden hier abgebrochen (1 Woche Versuchszeit mit tägl. Unterbrechung), da die RG und die Polymerausbeute weiterhin etwa gleich und auf hohem Niveau geblieben waren.

Tabelle 1

| Beispiel | Nr. | 6 | 7 | 8 | 9 | 10 |
|---|---|---|---|---|---|---|
| $m^0$ | g | 60 | 190 | 216 | 227 | 216 |
| $\rho_s^{Saat}$ | kg/m³ | 200 | 620 | 720 | 756 | 718 |
| ZGI | $g\ m^{-3}\ h^{-1}$ | 402 | 385 | 399 | 400 | 397 |
| $t_R$ | h | 6 | 6 | 8,5 | 6 | 6 |
| $\Delta m$ | g | 235 | 224 | 343 | 219 | 211 |
| $\rho_s^{Produkt}$ | kg/m³ | 620 | 720 | 756 | 718 | 690 |
| z | - | 3,9 | 9,7 | 26,7 | 53,5 | 107 |
| $\Delta m/(m^0 * t)$ | $h^{-1}$ | 0,65 | 0,20 | 0,19 | 0,16 | 0,16 |
| $\tau$ | h | 1,5 | 5,1 | 5,4 | 6,2 | 6,1 |
| RGV | $kg\ m^{-3}\ h^{-1}$ | 130 | 122 | 134 | 122 | 117 |

Beispiel 11 (Copolymerisation)

Hier wurde AN gemeinsam mit dem Comonomeren Acrylsäuremethylester (AME) polymerisiert. Die Reaktion wurde in der üblichen Weise, bei einer Temperatur von 60 °C und bei einem Reaktionsdruck von 470 hPa durchgeführt. Es wurden 60 g des auch in Beispiel 1 verwendeten Saatpulvers vorgelegt. Die Reaktionslösung bestand zu 86,54 Vol.-% aus AN, zu 9,62 Vol.-% aus AME und zu 3,85 Vol.-% aus DMF. In dieser Lösung wurde CHPC gelöst und zwar in einer Konzentration von 1,25 kg/m³ Volumen des Gemisches aus AN, AME und DMF. Die Reaktionslösung wurde mit einem Volumenstrom von 107,4 ml/h in den Reaktor gefördert. Das entspricht einer ZGI von 447 $g.m^{-3}\ h^{-1}$. Nach einer Reaktionszeit von 6 h betrug der Massezuwachs des Polymeren 279 g. Das entspricht einem Podukt/Saat-Verhältnis von 4,6, einer Zeit $\tau$ von 1,3 h und einer RGV von 155 $kg \cdot m^{-3} \cdot h^{-1}$.

Ersetzt man in den Versuchen 4-11 das Dimethylformamid durch Dimethylacetamid (DMA) oder DMSO (Dimethylsulfoxid), so werden praktisch gleichartige Ergebnisse erhalten.

Beispiel 12 (Initiierung mit einem Redoxsystem)

Hier wurde ein Redoxsystem bestehend aus Tertiär-butylhydroperoxid (tBHP) und Schwefeldioxid ($SO_2$) zur Initiierung der Reaktion verwendet. Die Initiatorkomponenten wurden getrennt in AN gelöst und an unterschiedlichen Stellen in das auch in den vorhergehenden Ausführungsbeispielen benutzte Reaktionsgefäß eindosiert. Die Öffnung, durch die die tBHP/AN-Lösung in den Reaktionsraum floß, befand sich in der Reaktorwand und unterhalb der Oberfläche der Pulverschüttung. Das AN/$SO_2$-Gemisch wurde durch eine vertikal in die Pulverschüttung eintretende Leitung in den Reaktionsraum eingeleitet. Die Zuleitung für das AN/$SO_2$-Gemisch wurde beheizt, so daß AN und $SO_2$ gasförmig in den Reaktor eintraten.

Das Beispiel wurde in analoger Weise zu den vorhergehenden Beispielen, aber ohne Verwendung einer Vermittlersubstanz, durchgeführt. Die Reaktionstemperatur betrug 60 °C und der Reaktionsdruck 500 hPa. Es wurden 50 g des auch in Beispiel 1 verwendeten Saatpulvers vorgelegt. tBHP (80 %, flüssig, Fa. Peroxid-Chemie GmbH, Höllriegelskreuth) wurde in einer Konzentration von 15,3 kg/$m^3$ in AN gelöst. Diese Lösung wurde mit einem Volumenstrom von 12 ml/h in den Reaktionsraum eindosiert. Das entspricht einer ZGI (bezüglich tBHP) von 734 g $m^{-3}$ $h^{-1}$. $SO_2$ wurde in einer Konzentration von 128 kg/$m^3$ in AN gelöst. Diese Lösung wurde mit einem Volumenstrom von 60 ml/h in den Reaktionsraum eindosiert. Nach einer Reaktionszeit von 6 h betrug der Massezuwachs 110 g. Das entspricht einem Produkt/Saat-Verhältnis von 2,2, einer Zeit $\tau$ von 2,7 h und einer RGV von 73 kg $m^{-3}$ $h^{-1}$.

Sowohl für das Saatpulver als auch für das Produkt wurde der Säuregehalt durch potentiometrische Titration nach Iionenaustausch (Mischbettaustausch) bestimmt. Dazu wurden Proben beider Pulver in Dimethylsulfoxid gelöst. Der gesamte Säuregehalt betrug im Saatpulver 50 milliÄquivalente pro kg (mÄquiv/kg) und im Produkt 94 mÄquiv/kg. Der Gehalt an starker Säure betrug im Saatpulver 15,7 mÄquiv/kg und im Produkt 39,2 mÄquiv/kg. Dies bedeutet einen Einbau von $SO_2$ in das PAN-Polymerisat in Form von stark sauren Gruppen. Damit ist auch eine Anfärbbarkeit (insbesondere von aus dem Polymerisat ersponnenen) PAN-Fasern mittels basischer Farbstoffe gegeben, ohne daß spezifische saure Comonomere gezielt in das Polymerisat miteingebaut worden sind.

## Patentansprüche

**1.** Verfahren zur Herstellung von Polyacrylnitrilpolymeren und Polyacrylnitrilcopolymeren durch Festphasenpolymerisation von Acrylnitril aus der Gasphase in Gegenwart von Initiatoren und von vorgelegten Feststoffen, dadurch gekennzeichnet, daß man

a) Acrylnitril, alleine oder gemeinsam mit anderen copolymerisierbaren Monomeren, bei

b) Druck- und Temperaturbedingungen, bei denen diese Monomere und gegebenenfalls Comonomere im thermodynamischen Gleichgewicht gasförmig oder sorbiert vorliegen,

bei 30 bis 120 °C, vorzugsweise bei 40 bis 90 °C und

unter einem Acrylnitril-Partialdruck von 80 bis 3200 hPa und

einem Sättigungswert $P_M/P_M^o$ (Verhältnis aus tatsächlichem Dampfdruck $P_M$ und dem Sattdampfdruck $P_M^o$ des bzw. der Monomeren) von 0,5 bis 1, bevorzugt 0,75 bis 0,97,

unter weitgehendem Ausschluß von Sauerstoff,

c) in Gegenwart eines PAN-(Co)Polymeren als pulverförmiges Saatpolymer

d) und in Gegenwart von unter den Reaktionsbedingungen praktisch nichtflüchtigen Initiatoren,

e) gegebenenfalls in Gegenwart von flüssigen Vermittlersubstanzen, welche Lösungsmittel oder starke Quellmittel für PAN-Homo- oder Copolymerisate darstellen,

in solche geringen Mengen, daß das Saatpolymer c) noch pulverförmig rührbar ist, vorzugsweise in Mengen von 0,1 bis 15 Gew.-%, bezogen auf jeweils vorhandenes PAN(Co)Polymerisat,

f) gegebenenfalls in Gegenwart von Inertgasen,

mit einer hohen Reaktionsgeschwindigkeit, welche zu einer Verdoppelung der vorgelegten Saat-Pulvermasse in einer Zeit $\tau$ <15 h, zu pulverförmigen PAN(Co)-Polymerisaten umsetzt,

und dabei auf das in Bewegung gehaltene, vorgelegte PAN(Co)Polymerisat flüssiges Acrylnitril auf- oder einleitet und über eine Regelung den Sättigungswert $P_M/P_M^o$ in den beanspruchten Grenzen hält und überschüssige Monomere außerhalb des Reaktionsgefäßes kondensiert und flüssig in das Reaktionsgefäß zurückführt und die Initiatoren und gegebenenfalls Vermittlersubstanzen in zumindest einen der Zuleitungsströme kontinuierlich oder intermittierend einträgt.

**2.** Verfahren nach Anspruch 1, dadurch gekennzeichnet, daß man als Temperaturbedingung b) 45 bis 70 ° C einhält.

**3.** Verfahren nach Anspruch 1 und 2, dadurch gekennzeichnet, daß ein Sättigungswert $P_M/P_M^o$ von 0,75 bis 0,97 eingehalten wird.

**4.** Verfahren nach Ansprüchen 1 bis 3, dadurch gekennzeichnet, daß als Vermittlersubstanzen hochpolare organische Amid-, Sulfoxid-, Sulfon- oder Phosphoramid-Lösungsmittel für das Polyacrylnitril in Mengen von 0,1 bis 15 Gew.-% eingesetzt werden.

**5.** Verfahren nach Ansprüchen 1 bis 4, dadurch gekennzeichnet, daß Dimethylacetamid, Dimethylformamid oder Dimethylsulfoxid als Vermittlersubstanz verwendet wird.

**6.** Verfahren nach Ansprüchen 1 bis 5, dadurch gekennzeichnet, daß als Initiatoren Redoxinitiatoren eingesetzt werden, bei denen eine Komponente praktisch nicht flüchtig ist und die Komponenten in getrennten Leitungen dem Reaktionsraum zugeführt werden.

**Claims**

**1.** Process for the production of polyacrylonitrile polymers and polyacrylonitrile copolymers by solid phase polymerisation of acrylonitrile from the gas phase in the presence of initiators and initially introduced solids, characterised in that

a) acrylonitrile, alone or together with other copolymerisable monomers, is reacted to form pulverulent PAN (co)polymers under

b) pressure and temperature conditions at which these monomers and optionally comonomers are present at thermodynamic equilibrium in gaseous or sorbed form,
at 30 to 120 ° C, preferably at 40 to 90 ° C
and
under an acrylonitrile partial pressure of 80 to 3200 hPa and
a $P_M/P_M^o$ saturation value (ratio of actual vapour pressure $P_M$ and the saturated vapour pressure $P_M^o$ of the monomer or monomers) of 0.5 to 1,
preferably 0.75 to 0.97,
with virtual exclusion of oxygen,

c) in the presence of a PAN (co)polymer as a pulverulent seed polymer

d) and in the presence of initiators which are practically non-volatile under the reaction conditions,

e) optionally in the presence of liquid mediator substances which constitute solvents or strong swelling agents for PAN homo- or copolymers, in small quantities such that the seed polymer c) is still stirrable as a powder, preferably in quantities of 0.1 to 15 wt.% related to the quantity of PAN (co)polymer present,

f) optionally in the presence of inert gases,

at a high reaction rate which leads to a doubling of the mass of the initially introduced seed polymer in a period $\tau$ <15 hours,
and, in this process, liquid acrylonitrile is passed onto or into the initially introduced PAN (co)polymer, which is maintained in motion, and the saturation value $P_M/P_M^o$ is maintained within the claimed limits by means of a control system and excess monomers are condensed outside the reaction vessel and returned to the reaction vessel in liquid form and the initiators and optionally mediator substances are added continuously or intermittently in at least one of the feed streams.

**2.** Process according to claim 1, characterised in that the temperature condition b) is maintained at 45 to 70 ° C.

**3.** Process according to claims 1 and 2, characterised in that a $P_M/P_M^o$ saturation value of 0.75 to 0.97 is maintained.

**4.** Process according to claims 1 to 3, characterised in that highly polar, organic amide, sulphoxide, sulphone or phosphorus amide solvents of acrylonitrile are used as mediator substances in quantities of 0.1 to 15 wt.%.

5. Process according to claims 1 to 4, characterised in that dimethylacetamide, dimethylformamide or dimethyl sulphoxide are used as the mediator substance.

6. Process according to claims 1 to 5, characterised in that the initiators used are redox initiators, in which one component is practically non-volatile and the components are introduced into the reaction zone through separate lines.

**Revendications**

1. Procédé de préparation de polymères de l'acrylonitrile et de copolymères de l'acrylonitrile par polymérisation en phase solide de l'acrylonitrile à partir de la phase gazeuse en présence d'inducteurs et de matières solides introduites à l'origine, caractérisé en ce que l'on convertit :
   a) de l'acrylonitrile seul ou avec d'autres monomères copolymérisables,
   b) dans des conditions de température et de pression dans lesquelles le monomère et le cas échéant les comonomères sont, en équilibre thermodynamique, à l'état gazeux ou sorbé,
   à des températures de 30 à 120 ° C, de préférence de 40 à 90 ° C et sous une pression partielle de l'acrylonitrile allant de 80 à 3 200 hPa, et à une valeur de saturation $P_M/P_M^o$ (rapport entre la pression de vapeur réelle $P_M$ et la pression de vapeur saturante $P_M^o$ du ou des monomères) de 0,5 à 1, de préférence de 0,75 à 0,97,
   à l'abri total de l'oxygène,
   c) en présence d'un polymère ou copolymère de l'acrylonitrile servant de polymère de germe pulvérulent,
   d) et en présence d'inducteurs pratiquement non volatils dans les conditions de réaction,
   e) éventuellement en présence de substances médiatrices liquides qui constituent des solvants ou des agents gonflants puissants des homopolymères et copolymères de l'acrylonitrile,
   en quantité suffisamment faible pour que le polymère de germe c) reste encore agitable à l'état pulvérulent, de préférence en quantité de 0,1 à 15 % du poids du polymère ou copolymère d'acrylonitrile présent à chaque moment,
   f) éventuellement en présence de gaz inertes, avec une forte vitesse de réaction, conduisant à une multiplication par deux du poids de la poudre de germe introduite à l'origine en un temps t inférieur à 15 h, en polymères ou copolymères pulvérulents de l'acrylonitrile,

   en envoyant sur le polymère ou copolymère de l'acrylonitrile introduit à l'origine et maintenu en mouvement, de l'acrylonitrile liquide, et en maintenant par un réglage la valeur de la saturation $P_M/P_M^o$ dans les limites spécifiées, en condensant l'excès de monomère hors du récipient de réaction et en le recyclant à l'état liquide dans le récipient de réaction, et en introduisant les inducteurs et le cas échéant les substances médiatrices en continu ou par intermittence dans au moins un des courants d'alimentation.

2. Procédé selon la revendication 1, caractérisé en ce que l'on maintient la température b) entre 45 et 70 ° C.

3. Procédé selon les revendications 1 et 2, caractérisé en ce que l'on maintient une valeur de saturation $P_M/P_M^o$ de 0,75 à 0,97.

4. Procédé selon les revendications 1 à 3, caractérisé en ce que l'on utilise en tant que substances médiatrices des solvants organiques fortement polaires du polyacrylonitrile, des types amides, sulfoxydes, sulfones ou phosphoramides, en quantité de 0,1 à 15 % en poids.

5. Procédé selon les revendications 1 à 4, caractérisé en ce que l'on utilise en tant que substance médiatrice le diméthylacétamide, le diméthylformamide ou le diméthylsulfoxyde.

6. Procédé selon les revendications 1 à 5, caractérisé en ce que l'on utilise en tant qu'inducteurs des inducteurs redox dont un composant est pratiquement non volatil, et on envoie les composants dans la zone de réaction par des conduits séparés.

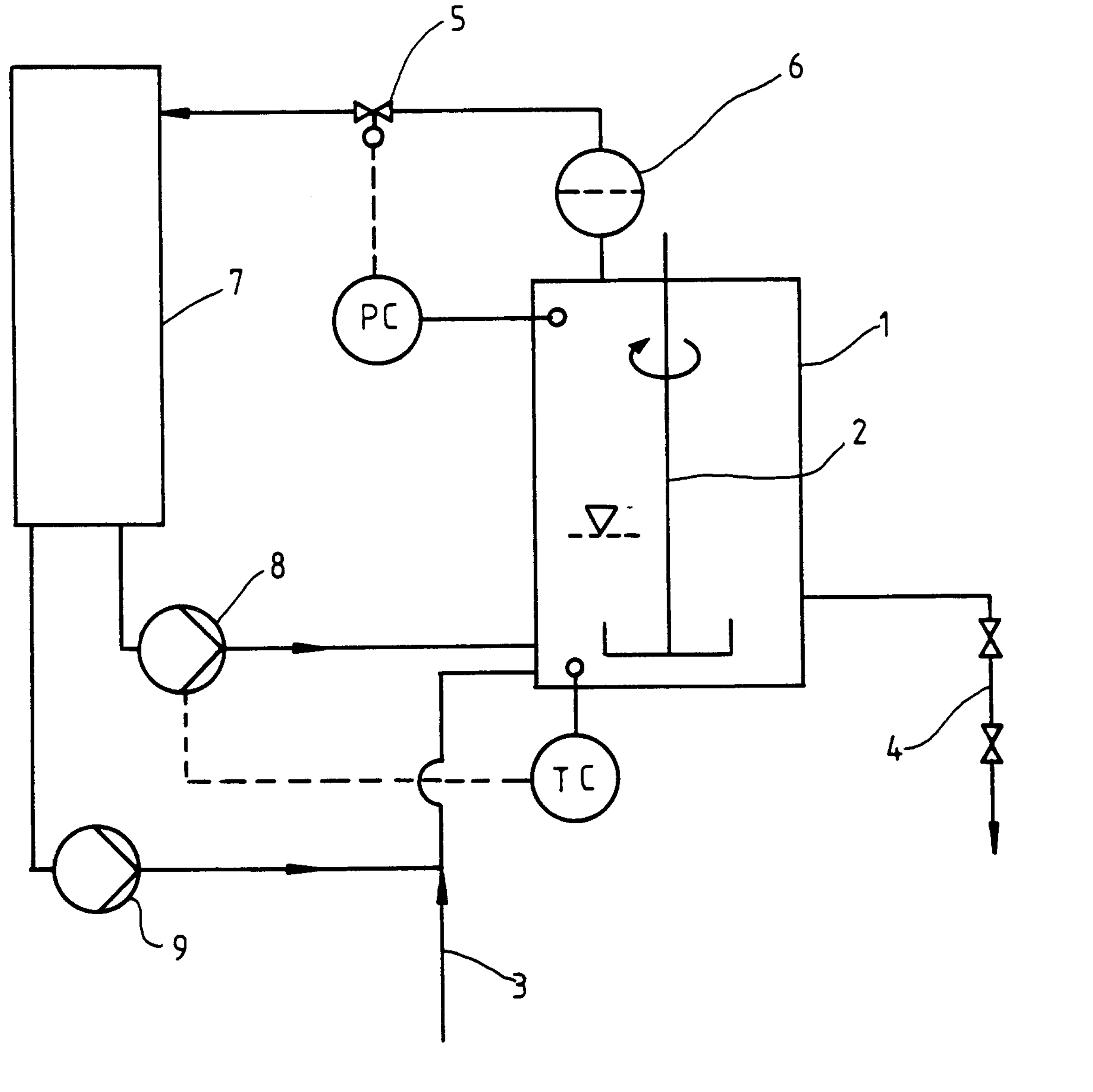


FIG.1

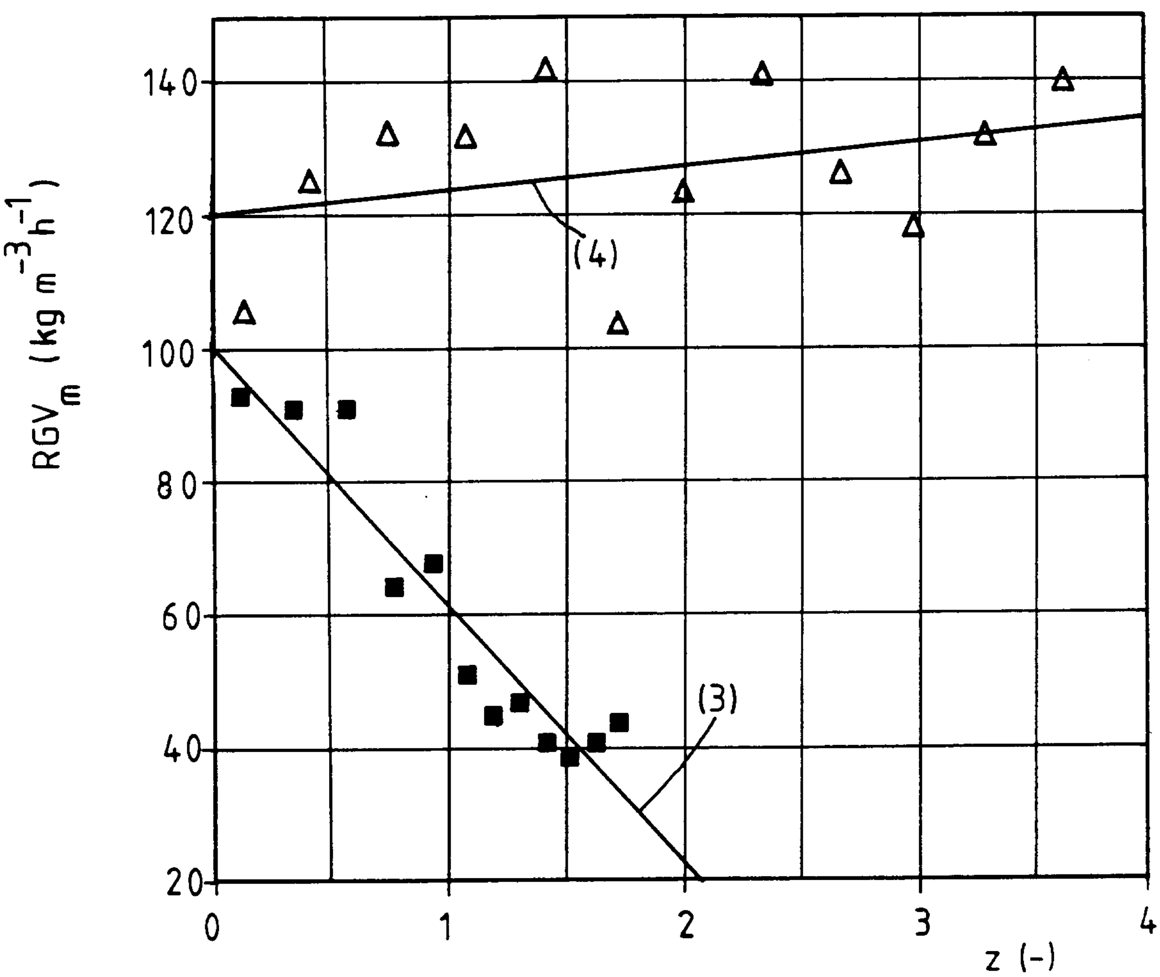


FIG. 2